# EUROPEAN PATENT APPLICATION

(11) **EP 1 858 219 A1**
(43) Date of publication of application: **21.11.2007**
(21) Application number: 06270049.7
(22) Date of filing: 16.05.2006
(51) Int. Cl.: H04L 29/06

(54) **TCP traversal through network address translators (NATS)**

(71) Applicant: Microsoft Corporation, Redmond WA 98052 (US)
(72) Inventor: Mevissen, Ron, Microsoft, 52072 Aachen (DE); Van Megen, Friedrich, Microsoft, 52072 Aachen (DE)
(74) Representative: Free, Rachel Alder

(57) **Abstract**

A network address translator (NAT) can be provided as part of a gateway between a private network and a public network. In situations where an entity in a private network requires establishment of a TCP connection to another entity in a separate private network, it is often the case that two NATs must be traversed one for each private network. In addition, these NATs may have associated one-way firewalls which block unsolicited incoming connections but allow outgoing connections. In this type of situation it is difficult to establish a TCP connection directly between the two entities in a simple and effective manner. We describe a method for achieving this which makes use of a redirection server in the public network to establish the connection but not to carry traffic during the communication session. We exploit features of the TCP simultaneous open process to establish a TCP connection directly between the entities.

## Description

### TECHNICAL FIELD

This description relates generally to TCP (transmission control protocol) traversal through network address translators (NATs); it is particularly related to, but in no way limited to, traversal through NATs with firewalls that block unsolicited incoming connections; hereafter referred to as one-way firewalls.

### BACKGROUND

Transmission control protocol (TCP) is a well known transport layer protocol of the internet protocol (IP) suite of protocols. It is a connection-oriented, reliable, byte stream service. We use the term "connection-oriented" herein to mean that two applications using TCP (such as a client and server or two peers) must establish a TCP connection with each other before they can exchange data.

A network address translator is a device or process which effectively translates between internet protocol addresses, for example, between public and private internet protocol addresses. For example, consider an intranet at an enterprise or a home network in a domestic environment. Here the individual devices on the network typically have private internet protocol addresses. In contrast, devices on the public internet typically have public internet protocol addresses. A NAT is typically provided as part of a gateway between the private network and the public network and enables entities in the public network to establish connections to entities in the private network. Entities within the private network are able to establish connections to one another using their private internet protocol addresses. Also, entities within the same private network are able to establish connections to entities in the public network in a simple manner. However, an entity in the public network does not have knowledge of the private addresses and so cannot directly contact an entity in the private network. In order to do this, a binding can be set up at the NAT between a private address and a port on the NAT with a public address. An entity in the public network is then able to contact an entity in the private network via the NAT to the configured port once a binding for that connection has been set up at the NAT.

A NAT is often associated or integrated with a firewall which may be a "one-way" firewall. A one-way firewall is one which only allows certain specified or configured incoming connections to pass through and blocks all other attempts to traverse the firewall and/or associated NAT.

Consider a situation in which several separate, private networks are connected to a public network, each connection being via a different NAT. This leads to the situation where an entity in one of the private networks requires to establish a connection with an entity in another of the private networks. This requires a connection to be established which traverses two NATs, one for each private network. This connection might be required for a voice over internet protocol session, content distribution, or for any other suitable purposes. Bindings need to be set up at both NATs and the situation is further complicated in the case that one-way firewalls are used. Thus there exists a need to provide a way of establishing such connections in a simple and effective manner. Also, there is a need to achieve this in a way which is scalable in terms of processing power and bandwidth requirements and which takes account of privacy issues, optimal routing issues, and security issues.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

A network address translator (NAT) can be provided as part of a gateway between a private network and a public network. In situations where an entity in a private network requires establishment of a TCP connection to another entity in a separate private network, it is often the case that two NATs must be traversed, one for each private network. In addition, these NATs may have associated one-way firewalls. In this type of situation it is difficult to establish a TCP connection directly between the two entities in a simple and effective manner. We describe a method for achieving this which makes use of a redirection server in the public network to establish the connection but not to carry traffic during the communication session. We exploit features of the TCP simultaneous open process to establish a TCP connection directly between the entities.

The present example provides a method of enabling a TCP connection to be established from a first entity in a private network to a second entity in a separate private network, those private networks being connected by a public network, each private network being connected to the public network via a network address translator, said method being suitable for enabling the TCP connection to be established over the network address translators in the case that the network address translators comprise one-way firewalls, comprising the steps of, at the first entity:
- establishing an out of band connection with the second entity via a redirection server in the public network;
- receiving connection setup parameters comprising address and port information over the out of band connection;
- initiating a TCP simultaneous open process;
- sending a TCP SYN message associated with the first entity in data form over the out of band connection;
- receiving a TCP SYN message associated with the second entity in data form over the out of band connection; and
- modifying the received TCP SYN message and issuing it as a control message into the private network of the first entity.

An example of a communications network node suitable for carrying out this method is also given:
A communications network node suitable for use in a private network and for enabling a TCP connection to be established from itself to a second entity in a separate private network, those private networks being connected by a public network, each private network being connected to the public network via a network address translator, said node being suitable for enabling the TCP connection to be established over the network address translators in the case that the network address translators comprise one-way firewalls, the node comprising:
   - means for establishing an out of band connection with the second entity via a redirection server in the public network;
   - an input arranged to receive address and port information over the out of band connection;
   - a processor arranged to initiate a TCP simultaneous open process;
   - an output arranged to send a TCP SYN message associated with the first entity in data form over the out of band connection;
   - the input also being arranged to receive a TCP SYN message associated with the second entity in data form over the out of band connection; and
   - means for modifying the received TCP SYN message and issuing it as a control message into the private network of the first entity.

An example of a method at a redirection server is also given:

A method of enabling a TCP connection to be established from a first entity in a private network to a second entity in a separate private network, those private networks being connected by a public network, each private network being connected to the public network via a network address translator, said method being suitable for enabling the TCP connection to be established over the network address translators in the case that the network address translators comprise one-way firewalls, comprising the steps of, at a redirection server in the public network:
- accessing an out of band connection to each of the first and second entities;
- providing public address and port information associated with the network address translators to the first and second entities over the out of band connection;
- predicting a public port to be used at each network address translator for the desired TCP connection;
- for each of the first and second entities, providing the predicted public port of the associated opposing network address translator over the out of band connection;
- receiving at least one TCP SYN message in data form over the out of band connection;
- modifying the received TCP SYN message(s) and forwarding them in data form over the out of band connection.

An example of the redirection server itself is:

A redirection server suitable for use in a public network for enabling a TCP connection to be established from a first entity in a private network to a second entity in a separate private network, those private networks being connected by the public network, each private network being connected to the public network via a network address translator, said redirection server being suitable for enabling the TCP connection to be established over the network address translators in the case that the network address translators comprise one-way firewalls, the redirection server comprising:
- means for accessing an out of band connection to each of the first and second entities;
- an output arranged to provide public address and port information associated with the network address translators to the first and second entities over the out of band connection;
- a port predictor arranged to predict a public port to be used at each network address translator for the desired TCP connection;
- the output also being arranged, for each of the first and second entities, to provide the predicted public port of the associated opposing network address translator over the out of band connection;
- an input arranged to receive at least one TCP SYN message in data form over the out of band connection;
- a processor arranged to modify the received TCP SYN message(s) and forward them in data form over the out of band connection.

Preferably the redirection server is a well-known redirection server.

Preferably the received address and port information comprise a public address and public port at the network address translator associated with the second entity.

Preferably the received port information comprises a predicted public port of the network address translator associated with the second entity, the predicted port being predicted to be used in the TCP connection to be established.

Preferably the step of sending a TCP SYN message comprises copying a TCP SYN message issued by the first entity as part of the process of initiating a TCP simultaneous open process.

Preferably the method further comprises encapsulating the copied TCP SYN message in order to send it as data over the out of band connection.

Preferably the step of modifying the received TCP SYN message comprises changing address and port information in that TCP SYN message to mimic an in-bound network address translation process.

Referring now to the communications network node example.

In some embodiments this node is integral with a network address translator.

Preferably the means for modifying the received TCP SYN message comprises means for changing address and port information in that received TCP SYN message.

Preferably the means for changing the address and port information is arranged to make that change in order to mimic an in-bound network address translation process.

Preferably the node further comprises means for copying a TCP SYN message issued by the processor as a result of the process of initiating the TCP simultaneous open process.

Preferably the means for copying the TCP SYN message is provided as part of a TCP stack.

Preferably means for delaying TCP connection initializations during setup is provided as part of a TCP stack.

Referring to example method at a redirection server:

Preferably the step of modifying the received TCP SYN message(s) comprises changing address and port information in those messages in order to mimic an out-bound network address translation process.

Preferably the received TCP SYN message(s) are received from an originating private network and are forwarded to the other private network.

Referring to the example of the redirection server:

Preferably the processor is arranged to change address and port information in the received TCP SYN message(s) in order to mimic an out-bound network address translation process.

Another example provides a computer program comprising computer program code means adapted to perform all the steps of any of the methods mentioned above when said program is run on a computer.

Another example provides a computer program embodied on a computer readable medium.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a communications network having two private networks and a public network;
FIG. 2 shows the TCP "simultaneous open" process failing in a communications network;
FIG. 3 is a schematic diagram of a communications network for use in the present invention;
FIG. 4 is a message sequence chart for part of an embodiment of the invention;
FIG. 5 is a message sequence chart for part of an embodiment of the invention;
FIG. 6 is a message sequence chart for another embodiment using stateless firewalls;
FIG. 7 is a message sequence chart for TCP simultaneous open;
FIG. 8 is a schematic diagram of a communications network node in a private network and a redirection server in a public network.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilised. The description sets forth the functions of the example and the sequence of steps for constructing and operating the example. However, the same or equivalent functions and sequences may be accomplished by different examples.

Transmission control protocol (TCP) is specified in request for comments (RFC) 793, Postel, J. B. ed. 1981 and related RFCs as publicly available. A text book guide to the TCP/IP protocol suite is "TCP/IP Illustrated, Volume 1; The protocols" by W. Richard Stevens 1994 ISBN 0201633469.

The term "in-bound" is used to refer to a direction of packet flow towards a private network.

The term "out-bound" is used to refer to a direction of packet flow out of a private network towards a public network;

The term "out of band connection" is used to refer to a connection between endpoints in separate private networks via a public network redirection or proxy server. In contrast, a direct communication between the endpoints does not comprise a public network redirection or proxy server.

The term "well known redirection server" is used to refer to any network node which has an address and one or more port identifiers which are known to, or publicly accessible to, most other nodes in the network.

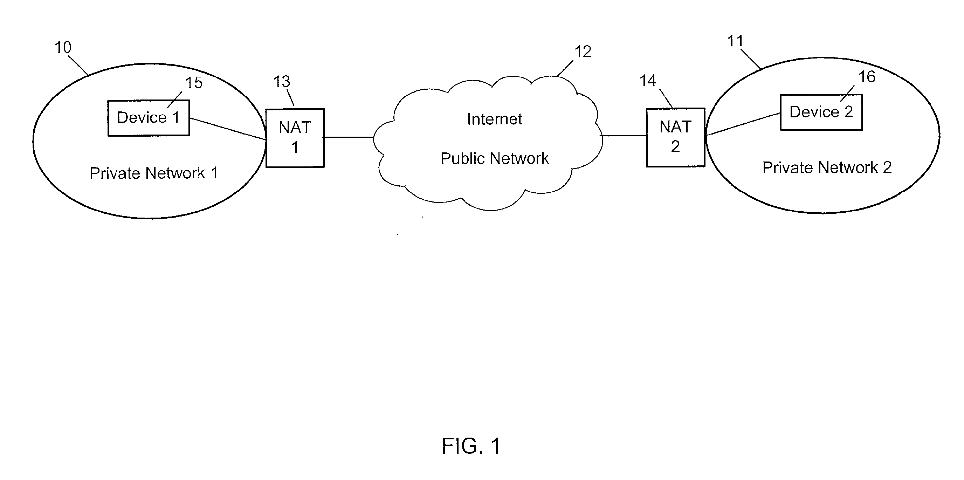

FIG. 1 is a schematic diagram of a communications network having two private networks and a public network. Two separate private networks 10, 11 referred to herein as private network 1 and private network 2 are connected to a public network 12 such as the Internet. These connections are achieved using network address translators (NATs) 13, 14 referred to as NAT 1 and NAT 2 respectively.

As mentioned above entities in the private networks have private internet protocol addresses and entities in the public network have public internet protocol addresses. The NATs are used to effectively "hide" the private addresses from the public internet. In order to enable entities in the public network to establish connections with entities in the private networks, bindings are set up at the NATs as already described and as known in the art.

In some embodiments described herein, one or both NATs are integral with or connected to one-way firewalls. The firewalls provide the function of controlling or protecting access to the private networks from the public networks. However, it is not essential to use firewalls. Some embodiments of the invention use NATs without firewalls or with firewalls that are not one-way.

Consider the situation in which device 1, (1 5 in FIG. 1) desires to set up a TCP connection to device 2 (16 in FIG. 1). Both devices are in separate private networks and so bindings need to be set up at both NAT 1 and NAT 2. This is difficult to achieve because, device 1 does not know the private address of device 2 and device 2 does not know the private address of device 1. The TCP connection might be required for content distribution between device 1 and device 2, for messaging or phone applications or for remote assistance applications and the like. The TCP connection can be used for any suitable purpose.

One possible approach to addressing this problem is to arrange both devices to establish connections to each other at the same time. In the TCP protocol this is referred to as "Simultaneous Open". However, we have recognised that this approach fails in the case that one-way firewalls are present at both NATs. The presence of a one-way firewall typically means that an incoming unexpected or unsolicited connection request (from public to private) is always blocked by the firewall while an outgoing (private to public) connection request is usually allowed to pass the firewall. This provides enhanced protection for devices behind the one-way firewall but it also has the effect that TCP's "simultaneous open" cannot be used to establish connections between devices in such separate private networks.

Other known approaches involve using an entity in the public network as a redirection server or proxy for the duration of the whole communication session. However, this is problematic because all the traffic for the communication session passes through the redirection or proxy server. This type of solution has many drawbacks such as:
- lack of scalability in terms of processing power at the redirection or proxy server;
- lack of scalability in terms of bandwidth at the redirection or proxy server;
- reduced privacy;
- non-optimal routing between the two endpoints because traffic must pass through the redirection or proxy server.

Our solution involves using aspects of the TCP "simultaneous open" process together with an entity in the public network to act as a proxy or redirection server for only part of the communication session. We use an entity in the public network to act as a proxy or redirection server only to enable a connection between the devices (also referred to as peers) to be established and not to carry traffic during the communication session itself. This means that the problems mentioned above relating to use of public network redirection servers are avoided.

More detail about the existing TCP "simultaneous open" process is now described to aid understanding of our invention.

A successful simultaneous open process in TCP involves the following steps (with reference to FIG. 1):
- Device 1 sends a SYN packet to Device 2
- Device 2 sends a SYN packet to Device 1
- Device 2 receives a SYN packet from Device 1 and sends a SYNACK packet back to Device 1
- Device 1 receives a SYN packet from Device 2 and sends a SYNACK packet back to Device 2

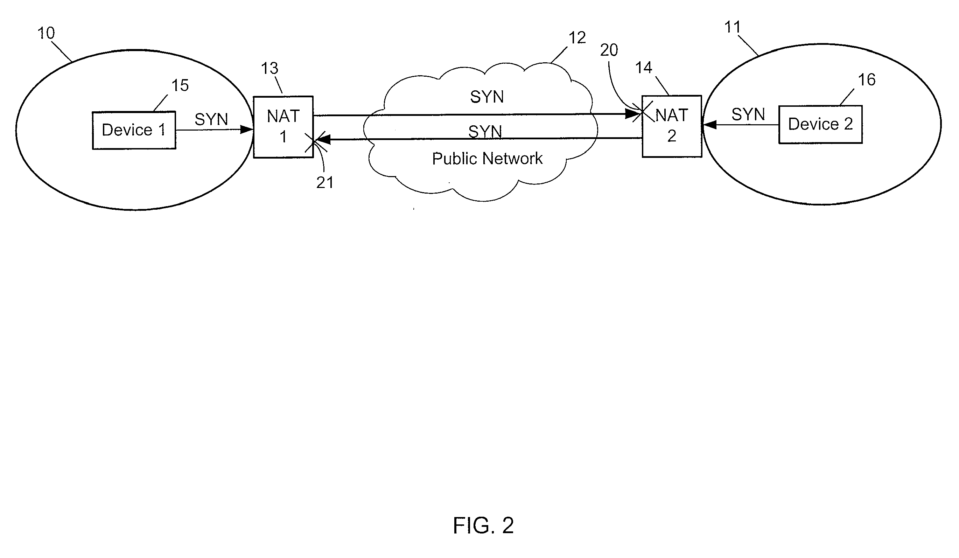

However, in the case that a one-way firewall is used at both NATs then SYN packets are dropped and the process fails. This is illustrated in FIG. 2 which is the same as FIG. 1 but showing the direction of travel of SYN packets. A SYN packet originating from Device 1 passes to NAT 1 and from there towards NAT 2. On reaching NAT 2 that SYN packet is dropped (see indication 20 in FIG. 2) because a one-way firewall associated with the NAT will not allow any TCP packets entry to the private network 11 unless there is an already established TCP connection corresponding to the TCP packet requesting entry. Similarly, a SYN packet originating from Device 2 is dropped on reaching NAT 1 (see indication 21 in FIG. 2).

In addition, there are other problems. For example, in order for the devices to send the SYN packets to each other, they need to know appropriate addresses to use. Both devices are in separate private networks and so their addresses are not available to one another.

In the case that a one-way firewall is used at only one of the NATs then it is theoretically possible for a TCP connection setup to complete. This involves the side not having a one-way firewall to send a SYN packet through its local NAT device first. However, this method is highly timing dependent such that in public it is not always workable. Thus the methods we propose are also advantageous in situations where only one of the NATs has a one-way firewall.

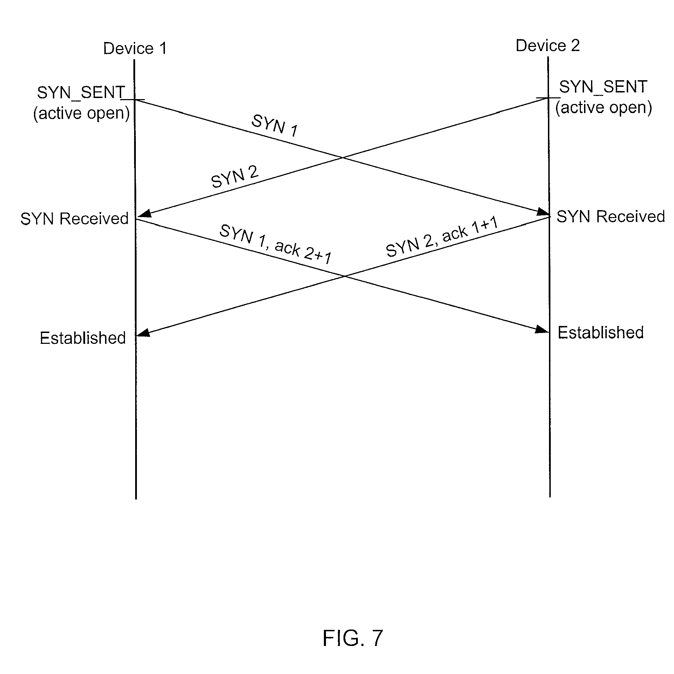

TCP is specifically designed to provide the simultaneous open process whereby the two endpoints both perform an active open to each other at substantially the same time. TCP is designed such that this gives rise to a single connection and not two connections as other protocol suites such as the OSI transport layer would do in the same situation. For simultaneous open to work each endpoint must have a local port number that is well known to the other endpoint. In addition, the two ends must be started at about the same time so that the SYN messages cross each other. This is illustrated in FIG. 7 which shows the TCP simultaneous open process in more detail.

As illustrated in FIG. 7 both devices send a SYN message at approximately the same time and the SYN messages cross one another. Both devices enter a state indicating that a SYN has been sent. The state changes to SYN received when each device receives a SYN as shown. Each device then resends the same SYN that it sent before. So device 1 resends SYN 1 and device 2 resends SYN 2 in our FIG. 7 example. Together with the resent SYN is an acknowledgement of the received SYN. Herein we refer to the combination of the resent SYN and the acknowledgement as a SYNACK. When each device receives the SYNACK the state changes to "established" as illustrated.

This simultaneous open process differs from the three way handshake method of forming TCP connections. That three way handshake involves the requesting end sending a SYN to the receiving end. The receiving end responds with its own SYN together with an acknowledgement of the received SYN. Finally, the requesting end sends an acknowledgement of the SYN it receives.

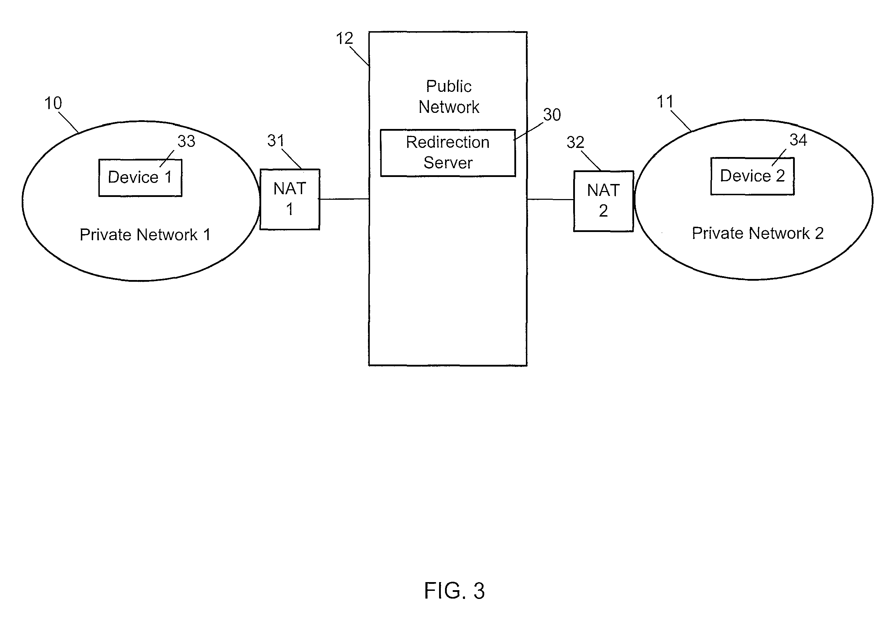

FIG. 3 is a schematic diagram of a communications network suitable for use in an embodiment of the invention. It is similar to Figs. 1 and 2 except that the public network 12 comprises a redirection server 30 and the NATs 31, 32 and or the devices 33, 34 comprise additional functionality provided by any of software, hardware, firmware or similar.

The additional functionality provided at the NATs or devices is arranged to capture initial SYN packets originating from the associated private network, to copy those, encapsulate them in another packet, and send the encapsulated result to the redirection server.

The redirection server is arranged to receive the encapsulated SYN packets, modify the address information in those SYN packets, and send those SYN packets on to the destination NAT. The redirection server, in some embodiments, also predicts a port that will be used at the destination NAT, and sends the modified SYN packet to that predicted port.

In addition, the devices comprise functionality to carry out an in-bound NAT process on modified SYN packets received from the redirection server.

In high level terms our approach can be thought of as using added functionality in the public and private networks to create "dummy", "spoof" or modified TCP packets. Those modified packets contribute to causing the one-way firewalls to think that the required TCP states are present at the right times to enable the TCP simultaneous open process to work. In a preferred embodiment, a dummy TCP packet is created at each originating device, with a 'spoof' out-bound NAT process carried out at a redirection server in the public network. A 'spoof' in-bound NAT process is then carried out at the destination devices. However, this is not essential, the spoof out-bound NAT process could be done at the out-bound NAT itself or at any other suitable network node. Also, the spoof in-bound NAT process could be done at the in-bound NAT box or at any other suitable network node.

For example, a method for establishing a connection between devices 33, 34 in separate private networks 10, 11, via public network 12, can be thought of as comprising:
- Establishing an 'out of band' connection between the devices via a redirection or proxy server in the public network;
- Using the out of band connection to enable each origin device to gain knowledge of a public IP address and port at its destination NAT, likely to be used for the desired connection;
- Initiating a simultaneous open process (which will later fail if one-way firewalls are present);
- Copying the initial SYN packets sent by each device and sending them in encapsulated form to the redirection server;
- Performing outbound network address translation of those SYN packets at the redirection or proxy server to mimic an outbound network address translation process that would have occurred in sending such a SYN packet to the destination NAT box;
- Sending the modified SYN packets as encapsulated data to their destination devices using the out of band connection;
- Performing an in-bound network address translation process at the devices to mimic an in-bound network address translation process that would have occurred in sending such a SYN packet to the destination private device;
- Inject the modified SYN packets into the network so the respective devices then receive them;
- Each device acts as if it had received a normal SYN packet which indicates establishment of a TCP connection via a TCP "simultaneous open" process.

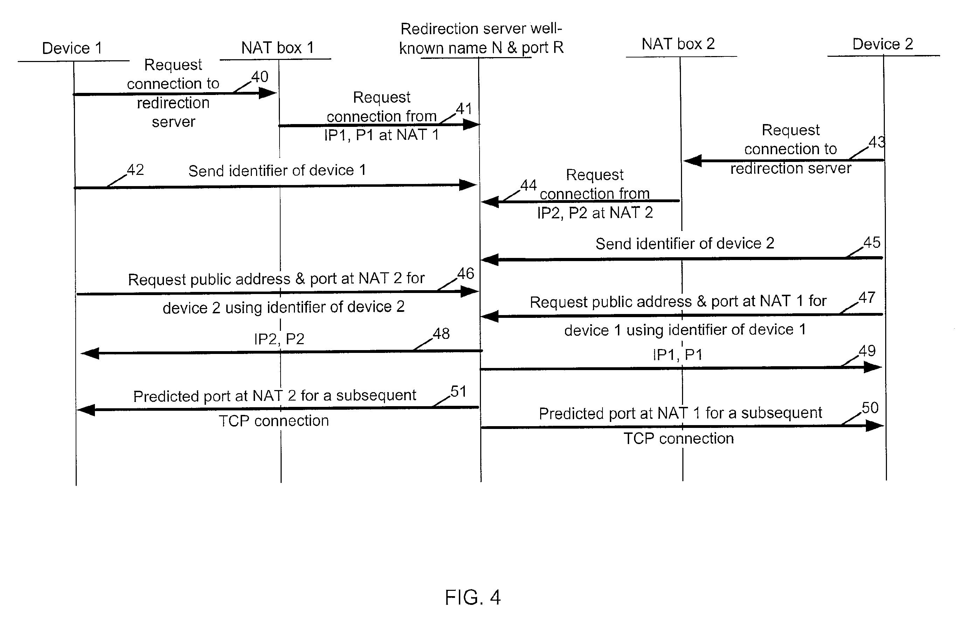

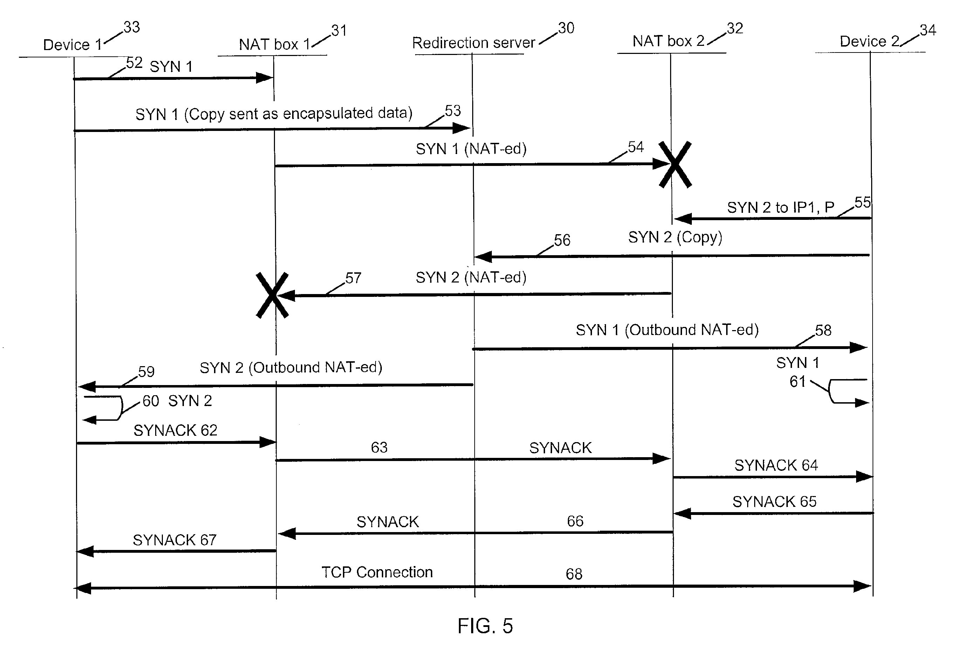

An example of a method of establishing a connection between devices 33, 34 in separate private networks 10, 11, via a public network 12 , is now described with reference to FIG. 3, FIG. 4 and FIG. 5. Figs. 4 and 5 are message sequence charts where vertical lines represent entities in the communications network as indicated. Arrows between the vertical lines indicate flow of a message with the direction of the arrow indicating the direction of flow. The relative position of the arrows on the diagram indicates the chronological sequence of messages.

FIG. 4 shows an example high level message sequence for the process of establishing an out of band connection and passing information about public IP addresses and ports likely to be used for the desired final connection to the devices. The out of band connection is preferably a TCP connection, although this is not essential, any suitable type of communication can be used.

Device 1 sends a request 40 to establish a connection to a well-known redirection server 30 (FIG. 3). Device 1 has access to an identifier and/or network address for the well-known redirection server 30. This request is received at NAT 1 (31 in FIG. 3) which sets up an appropriate binding and sends on a corresponding request 41 to the redirection server 30 in the public network. Suppose that NAT 1 assigns one of its ports P1 with public address IP1 as part of that binding. This enables the redirection server to contact the private network Device 1 using that public address and port at NAT 1. As a result of this process Device 1 knows IP1 and P1 and associates those with the redirection server. Device 1 also sends (see message 42) an identifier of itself to the redirection server 30 via NAT 1 using the connection just set up.

Device 2 carries out the same process to establish a connection to the same well-known redirection server. A request 43 is sent to NAT 2 (32 in FIG. 3) in order to connect to the redirection server 30. NAT 2 sets up an appropriate binding between the private address of Device 2 and a public address IP2 and public port P2 and associates those with the redirection server. NAT 2 sends the request for a connection on to the redirection server (see message 44). Once the connection between Device 2 and the redirection server is set up, Device 2 sends (see message 45) an identifier of itself to the redirection server via NAT 2.

Device 1 has access to the identifier of Device 2, for example by accessing information on a web site, receiving configuration information, receiving user input or in any other suitable manner. Similarly, Device 2 has access to the identifier of Device 1.

Device 1 sends a request to the redirection server over the out of band connection. This request (see 46 in FIG. 4) is for the public IP address and port associated with Device 2 at NAT 2. In response, Device 1 receives the information IP2, P2 (see message 48 in FIG. 3). Device 2 carries out a similar process (see messages 47 and 49) to receive IP1 and P1 .

### Port Prediction

The redirection server carries out a port prediction process to predict or estimate the port at each of NAT 1 and NAT 2 which will be used for the desired 'simultaneous open' connection between Device 1 and Device 2. Any suitable port prediction algorithm can be used. Also it is not essential for the redirection server to carry out the port prediction. Any suitable private or public network entity can carry out the port prediction and make the results available to the redirection party server.

In a preferred embodiment the port prediction comprises making a specified increment, decrement or other linear change to the known port number associated with the out of band connection (e.g. P1 or P2). If the predicted port number is known to be already in use, the port prediction process is repeated until a port not known to be in use is found.

The redirection server sends the predicted NAT 1 port to device 2 (see message 50) and the predicted NAT 2 port to device 1 (see message 51). That is, each predicted NAT port is sent to its associated originating device over the existing out of band connection.

Once the out of band connection has been used to transfer the various public port and address information it is possible to begin a TCP simultaneous open process. This process fails in the presence of one-way firewalls and we carry out TCP packet modification, spoofing or NAT mimicry in order to enable a direct TCP connection between private network endpoint devices 1 and 2 to be formed. This is now explained by way of example with reference to FIG. 5.

Device 1 initiates a TCP simultaneous open process by sending a SYN packet to IP2, Predicted P2 (that is, a public IP address of NAT 2 and a predicted public port at NAT 2 which it is expected will be used for the final desired connection). This SYN message reaches NAT 1 which performs out-bound network address translation as known in the art and forwards the SYN message (see message 54) on to NAT 2. However, NAT 2 will not accept the SYN message because it is not in a state where it is expecting to receive such a message. The SYN message is therefore dropped. However, the passage of the SYN message through NAT 1 and arrival at NAT 2 changes the state at NAT box 1 even though the SYN message is eventually dropped. NAT 1 is now expecting to receive a SYNACK in response to the SYN that passed through it. NAT 2's state did not change in response to the SYN packet.

In the meantime, Device 1 makes a copy of the SYN packet it initiated and sends that copy as encapsulated data (see message 53 in FIG. 5) to the redirection server over the out of band connection.

Any suitable method of achieving copying of the originating SYN packet can be used. For example, the SYN packet is captured on the local device using network sniffing techniques, modifications in TCP stacks on the local device or in any other suitable way. This enables it to be sent as data rather than as a direct control packet.

This process is repeated at the other end of the desired connection. Thus local device 2 sends a SYN packet (see message 55) to NAT 2 which is forwarded on to NAT 1 (see message 57). At NAT 1 the SYN packet fails because of presence of a one-way firewall. The local device 2 makes a copy of the SYN packet (see 56 in FIG. 5) which is encapsulated and sent as data to the redirection server over the out of band connection.

The redirection server (or other suitable network entity) carries out outbound network address translation on the encapsulated SYN packets. This is the network address translation process that would have occurred if the encapsulated SYN packets had passed through their originating NATs as real control packets rather than as encapsulated data. In addition that NAT process needs to be for a SYN packet as if a required TCP simultaneous open process was working. Thus the private IP source address of Device 1 is translated to an appropriate public IP address at NAT 1. For example, ip1 is translated to IP1 . The private source port at Device 1 is translated to the predicted public port at NAT 1 (e.g. predicted P1). Similarly, the SYN from Device 2 is modified so that ip2 becomes IP2 and p2 becomes predicted P2.

After these modifications the SYN packets remain encapsulated and are sent as encapsulated data, over the existing out of band connection, to the respective local devices. This is shown by messages 58 and 59 in FIG. 5.

The SYN packets are taken out of their encapsulation and the local devices now carry out and thus mimic an in-bound network address translation on the encapsulated SYN packets. This involves changing the destination address and port information in those SYN packets. This information is changed from public addresses and ports to private addresses and ports.

The rewritten SYN packets are injected into the local networks by the local devices. Thus device 1 injects a SYN packet (associated with device 2) into its private network (see 60 in FIG. 5) and device 2 injects a SYN packet associated with device 1 into its private network (see 61 in FIG. 5). Thus the SYN packets are injected into the opposing private networks. The local devices now "think" that they have received a normal SYN packet which indicates the establishment of a TCP connection via the simultaneous open process.

Both local devices now proceed with the TCP simultaneous open process. Device 1 sends a SYNACK (see 62 in FIG. 5) in reply to the injected SYN (60). This SYNACK is allowed to pass (see 63, 64) the opposing NAT2 since this is the expected result. That is, NAT2 is expecting to receive a SYNACK because of SYN message 54 in FIG. 5. Device 2 also sends a SYNACK (see 65, 66, 67 in FIG. 5). As a result a TCP connection (see 68 in FIG. 5) is established between local devices 1 and 2. This end to end TCP connection is between two devices in private networks behind NATs with one-way firewalls. The out of band connection is then dropped because it is not needed for the remainder of the communication session.

### One-way firewalls

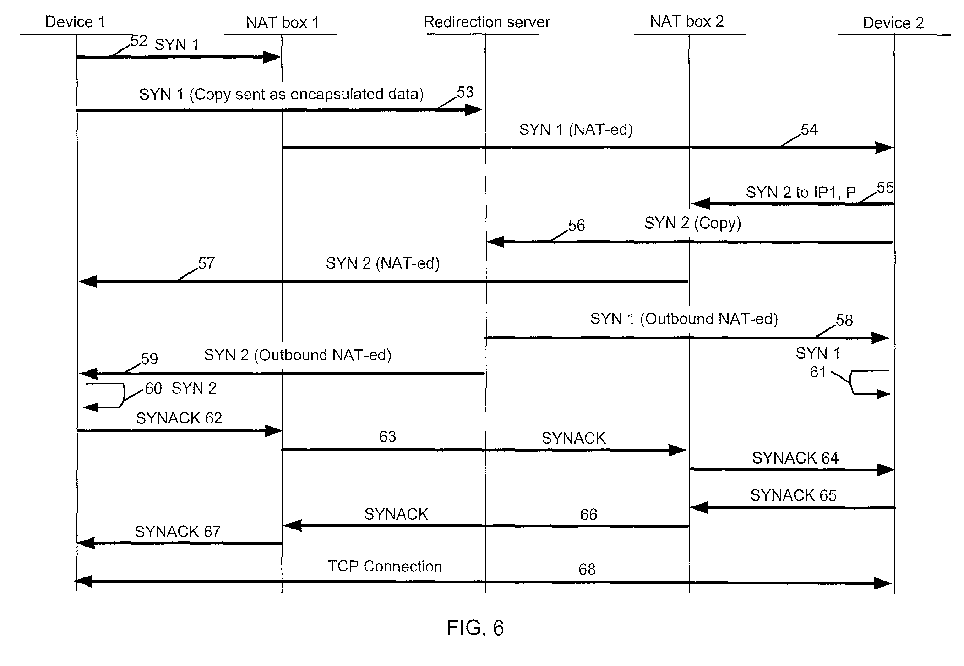

In the embodiment described above one-way firewalls were present on both sides. In another embodiment a one-way firewall is used only on one side. This is shown in the message sequence chart of FIG. 6 which is the same as the message sequence chart of FIG. 5 except that retransmissions of SYN messages 54 and 57 do not fail, instead reaching the local devices. This method is advantageous because it reduces the time taken to establish the TCP connection as opposed to using a standard TCP simultaneous open process. A standard TCP simultaneous open process has been discussed above with reference to FIG. 7. It can be seen that a SYN needs to be resent unlike the situation in FIG. 6.

### Port prediction optimisation

In current home or domestic private network environments there is a good chance that only one local device is active at any one time. In an embodiment of the invention we arrange the local device's TCP stack to delay any new outgoing connection request until the ongoing connection setup is complete (with either success or failure). This improves our ability to make accurate port predictions. Also, this does not affect established connections or connections to other devices in the private network since only SYN packets to the NAT box are affected.

In the case that our method fails because of inaccurate port prediction it is possible to arrange the process to repeat using feedback about the failed predicted ports.

In the examples discussed herein we have assumed that the NATs (e.g. 21, 32 in FIG. 3) have only a single public IP address each and multiple public ports. This is often the case, especially for NATs in domestic home networks. However, in the case that the NATs are large gateways or routers they may have multiple public IP addresses. In that case our methods additionally involve prediction of a public IP address to be used for the desired connection at each NAT. This is achieved in any suitable manner as known in the art.

In the examples discussed herein we have assumed that each private network has a single NAT gateway to the public network. However, in some cases, hierarchies of NATs exist. In such cases where multiple NATs are connected in series the methods we describe herein are workable and applicable.

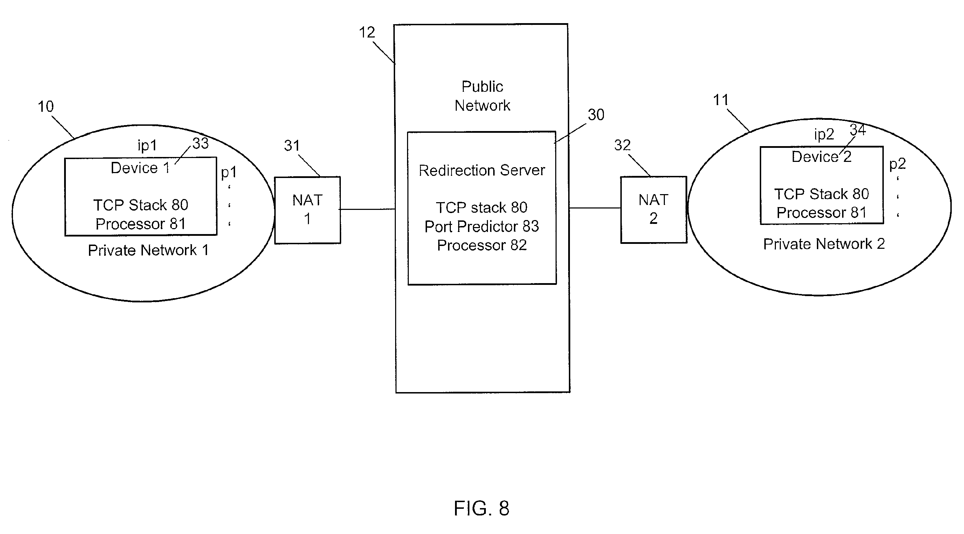

FIG 8 shows the apparatus of Device 1 and device 2 as well as the redirection server in more detail. Thus FIG. 8 corresponds to FIG. 3 but with more detail shown. Device 1 and Device 2 are both communications network nodes of any suitable type as known in the art provided in private networks. For example, Device 1 is a personal computer in a domestic environment or a laptop computer connected to a private intranet in an enterprise. Hardware and software implementation details for such personal computers or communications network nodes are known to the skilled person and are not repeated here for the sake of clarity. Device 1 and Device 2 both provide a TCP stack 80 and processor 81 together with software and/or hardware to operate TCP and communicate with other nodes in the private and public networks as known in the art. Device 1 as a communications network node in a private network has private ports p1 etc. and Device 2 also has private ports p2 etc. Device 1 has a private IP address ip1 and Device 2 a private IP address ip2. The processors 81 of the local devices 1 and 2 are arranged to perform an in-bound network address translation process as described above. The TCP stacks 80 and/or processors of Device 1 and 2 are also arranged to capture and copy the initial SYN message issued by the device when starting the TCP simultaneous open process as discussed above. The processors 81 are arranged to encapsulate those copied SYN messages and forward them to the redirection server over whichever of the public ports is being used for the out of band connection to the redirection server.

The redirection server 30 comprises a TCP stack 80 and processor 82 together with software and/or hardware to operate TCP and communicate with other nodes in the private and public networks as known in the art. The redirection server 30 also comprises a port predictor 82 which may or may not be integral with processor 82. The port predictor is arranged to provide the functionality for predicting ports as described above using any suitable software and or hardware. The redirection server is preferably but not essentially well-known. It has a public IP address and a plurality of public ports, one of which is used for the out of band connection with devices 1 and 2.
In some embodiments a communications network node is provided which is for example, device 1 or device 2. In that case the node comprises:
- means for establishing an out of band connection with the second entity via a redirection server in the public network. For example, this means comprises the TCP stack at the device implemented with appropriate hardware and software.
- an input arranged to receive address and port information over the out of band connection. For example, this input comprises at least the port at the device which is used for the out of band connection.
- a processor arranged to initiate a TCP simultaneous open process. For example, this is a processor of a PC at device 1 which supports software for providing a TCP stack and other functionality to initiate TCP simultaneous open.
- an output arranged to send a TCP SYN message associated with the first entity in data form over the out of band connection. For example, this output comprises at least the port at the device which is used for the out of band connection.
- the input also being arranged to receive a TCP SYN message associated with the second entity in data form over the out of band connection; For example, the input is the port at the device which is used for the out of band connection.
- means for modifying the received TCP SYN message and issuing it as a control message into the private network of the first entity. For example, this means comprises the processor and appropriate software at the device.

It is also possible for the communications network node to be integral with a network address translator as mentioned above.

The redirection server comprises in some embodiments:
- means for accessing an out of band connection with each of the first and second entities; For example, this is provided by the TCP stack at the redirection server implemented by appropriate software and/or hardware.
- an output arranged to provide public address and port information associated with the network address translators to the first and second entities over the out of band connection; For example, this is a port at the redirection server.
- a port predictor arranged to predict a public port to be used at each network address translator for the desired TCP connection; For example, the port predictor is implemented using any suitable software and or hardware.
- the output also being arranged, for each of the first and second entities, to provide the predicted public port of the associated opposing network address translator over the out of band connection;
- an input arranged to receive at least one TCP SYN message in data form over the out of band connection; For example, the input and output are a port at the redirection server.
- a processor arranged to modify the received TCP SYN message(s) and forward them in data form over the out of band connection. This processor is provided using any suitable hardware and or software.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

It will be understood that the above description of preferred embodiments is given by way of example only and that various modifications may be made by those skilled in the art.

The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention.

## Claims

1. A method of enabling a TCP connection to be established from a first entity (33) in a private network (10) to a second entity (34) in a separate private network (11), those private networks being connected by a public network (12), each private network being connected to the public network via a network address translator (31, 32), said method being suitable for enabling the TCP connection to be established over the network address translators in the case that the network address translators comprise one-way firewalls, comprising the steps of, at the first entity:
(i) establishing an out of band connection with the second entity via a redirection server (30) in the public network;
(ii) receiving address and port information over the out of band connection;
(iii) initiating a TCP simultaneous open process;
(iii) sending a TCP SYN message associated with the first entity in data form over the out of band connection;
(iv) receiving a TCP SYN message associated with the second entity in data form over the out of band connection; and
(v) modifying the received TCP SYN message and issuing it as a control message into the private network of the first entity.

2. A method as claimed in claim 1 wherein the redirection server (30) is a well-known redirection server.

3. A method as claimed in claim 1 or claim 2 wherein the received address and port information comprise a public address and public port at the network address translator (32) associated with the second entity.

4. A method as claimed in any preceding claim wherein the received port information comprises a predicted public port of the network address translator associated with the second entity, the predicted port being predicted to be used in the TCP connection to be established.

5. A method as claimed in any preceding claim wherein the step of sending a TCP SYN message comprises copying a TCP SYN message issued by the first entity as part of the process of initiating a TCP simultaneous open process.

6. A method as claimed in claim 5 which further comprises encapsulating the copied TCP SYN message in order to send it as data over the out of band connection.

7. A method as claimed in any preceding claim wherein the step of modifying the received TCP SYN message comprises changing address and port information in that TCP SYN message to mimic an in-bound network address translation process.

8. A communications network node (33) suitable for use in a private network (10) and for enabling a TCP connection to be established from itself to a second entity (34) in a separate private network (11), those private networks being connected by a public network (12), each private network being connected to the public network via a network address translator (31, 32), said node being suitable for enabling the TCP connection to be established over the network address translators in the case that the network address translators comprise one-way firewalls, the node comprising:
(i) means (80, 81) for establishing an out of band connection with the second entity via a redirection server in the public network;
(ii) an input (p1) arranged to receive address and port information over the out of band connection;
(iii) a processor (81) arranged to initiate a TCP simultaneous open process;
(iii) an output (p1) arranged to send a TCP SYN message associated with the first entity in data form over the out of band connection;
(iv) the input (p1) also being arranged to receive a TCP SYN message associated with the second entity in data form over the out of band connection; and
(v) means (81) for modifying the received TCP SYN message and issuing it as a control message into the private network (10) of the first entity (33).

9. A communications network node as claimed in claim 8 which is integral with a network address translator (31, 32).

10. A communications network node as claimed in claim 8 or claim 9 wherein the means for modifying the received TCP SYN message comprises means for changing address and port information in that received TCP SYN message.

11. A communications network node as claimed in claim 10 wherein the means for changing the address and port information is arranged to make that change in order to mimic an in-bound network address translation process.

12. A communications network node as claimed in claim 10 or claim 11 which further comprises means for copying a TCP SYN message issued by the processor as a result of the process of initiating the TCP simultaneous open process.

13. A communications network node as claimed in claim 12 wherein the means for copying the TCP SYN message is provided as part of a TCP stack (80).

14. A method of enabling a TCP connection to be established from a first entity (33) in a private network (10) to a second entity (34) in a separate private network (11), those private networks being connected by a public network (12), each private network being connected to the public network via a network address translator (31, 32), said method being suitable for enabling the TCP connection to be established over the network address translators in the case that the network address translators comprise one-way firewalls, comprising the steps of, at a redirection server in the public network:
(i) accessing an out of band connection to with each of the first and second entities;
(ii) providing public address and port information associated with the network address translators to the first and second entities over the out of band connection;
(iii) predicting a public port to be used at each network address translator for the desired TCP connection;
(iv) for each of the first and second entities, providing the predicted public port of the associated opposing network address translator over the out of band connection;
(v) receiving at least one TCP SYN message in data form over the out of band connection;
(vi) modifying the received TCP SYN message(s) and forwarding them in data form over the out of band connection.

15. A method as claimed in claim 14 wherein the step of modifying the received TCP SYN message(s) comprises changing address and port information in those messages in order to mimic an out-bound network address translation process.

16. A method as claimed in claim 14 or claim 1 5 wherein the received TCP SYN message(s) are received from an originating private network and are forwarded to the other private network.

17. A redirection server (30) suitable for use in a public network (12) for enabling a TCP connection to be established from a first entity (33) in a private network (10) to a second entity (34) in a separate private network (11), those private networks being connected by the public network (12), each private network being connected to the public network via a network address translator (31 , 32), said redirection server being suitable for enabling the TCP connection to be established over the network address translators (31, 32) in the case that the network address translators comprise one-way firewalls, the redirection server comprising:
(i) means (80, 82) for accessing an out of band connection to with each of the first and second entities;
(ii) an output arranged to provide public address and port information associated with the network address translators to the first and second entities over the out of band connection;
(iii) a port predictor (83) arranged to predict a public port to be used at each network address translator (31, 32) for the desired TCP connection;
(iv) the output also being arranged, for each of the first and second entities, to provide the predicted public port of the associated opposing network address translator over the out of band connection;
(v) an input arranged to receive at least one TCP SYN message in data form over the out of band connection;
(vi) a processor (82) arranged to modify the received TCP SYN message(s) and forward them in data form over the out of band connection.

18. A redirection server (30) as claimed in claim 17 wherein the processor is arranged to change address and port information in the received TCP SYN message(s) in order to mimic an out-bound network address translation process.

19. A computer program comprising computer program code means adapted to perform all the steps of any of claims 1 to 7 and 14 to 16 when said program is run on a computer.

20. A computer program as claimed in claim 19 embodied on a computer readable medium.
